# EUROPEAN PATENT SPECIFICATION

(11) **EP 3 899 713 B1**
(45) Date of publication and mention of the grant of the patent: **12.03.2025**
(21) Application number: 19899125.9
(22) Date of filing: 19.12.2019
(51) Int. Cl.: G06Q 20/06, G06Q 20/36, G06Q 40/04, G06Q 40/06, G06Q 40/10, G06F 7/02, G06F 7/08

(54) **GAIN AND LOSS COMPUTATION FOR CRYPTOCURRENCY TRANSACTIONS**
GEWINN- UND VERLUSTBERECHNUNG FÜR KRYPTOWÄHRUNGSTRANSAKTIONEN
CALCUL DE GAIN ET DE PERTE POUR TRANSACTIONS DE CRYPTOMONNAIE

(30) Priority: 20.12.2018 US 201862782605 P; 19.08.2019 US 201916544576; 19.08.2019 US 201916544555
(43) Date of publication of application: 27.10.2021
(73) Proprietor: Lukka, Inc., New York, NY 10011 (US)
(72) Inventor: SHTEYNBERG, Vadim, Naples, Florida 34108 (US); ZAKHAROV, Alexander, Naples, Florida 34108 (US)
(74) Representative: Marks & Clerk LLP
(86) International application number: PCT/US2019/067616
(87) International publication number: WO 2020/132330

(56) References cited:
- WO-A1-2014/210311
- WO-A1-2021/034852
- WO-A2-2006/063086
- US-A1- 2008 189 195
- US-A1- 2014 180 883
- US-A1- 2015 262 139
- US-A1- 2015 294 425
- US-A1- 2015 294 425
- US-A1- 2018 114 126
- US-A1- 2018 300 749
- US-A1- 2018 350 006
- KARTIK HEGADEKATTI ET AL: "Munich Personal RePEc Archive Examining Taxation of Fiat Money and Bitcoins Vis-A-Vis Regulated Cryptocurrencies", 2 October 2016 (2016-10-02), pages 1 - 10, XP055946072, Retrieved from the Internet <URL:https://mpra.ub.uni-muenchen.de/82073/1/MPRA_paper_82073.pdf> [retrieved on 20220725]

## Description

### TECHNICAL FIELD

The present disclosure is generally related to computing systems, and is specifically related to methods and systems for gain and loss computation for cryptocurrency transactions.

### BACKGROUND

"Cryptocurrency" herein shall refer to is a digital asset utilized as means of exchange; a typical cryptocurrency employs strong cryptography to control creation of new cryptocurrency units and validate exchange transactions. Certain transactions in cryptocurrency may represent taxable events, as defined by pertinent laws. US 2015/294425 A1 describes technology directed to tools for providing tax related services for virtual currency holdings, e.g. bitcoin holdings. WO 2006/063086 A2 describes a multi-participants financial transaction with no downside risks that results in a net profit for all participants when the transaction is accomplished according to certain required steps, including the steps of having simultaneously closing in escrow. US 2018/114126 A1 describes identifying process flows from log sources (e.g. log files), and generating visual representations (e.g. flow diagrams, Sankey diagrams, etc.) of the identified process flow. Kartik Hegadekatti ET AL: "Munich Personal RePEc Archive Examining Taxation of Fiat Money and Bitcoins Vis-à-vis Regulated Cryptocurrencies" describes taxation aspects of fiat money and bitcoin vis-à-vis regulated cryptocurrencies.

### BRIEF DESCRIPTION OF THE DRAWINGS

The present disclosure is illustrated by way of examples, and not by way of limitation, and may be more fully understood with references to the following detailed description when considered in connection with the figures, in which:
Fig. 1 schematically illustrates an example workflow for gain and loss computation for cryptocurrency transactions, in accordance with one or more aspects of the present disclosure;
Fig. 2 schematically illustrates an example data structure for storing normalized transaction records in accordance with one or more aspects of the present disclosure;
Fig. 3 schematically illustrates an example set of accounting perimeters, in accordance with one or more aspects of the present disclosure;
Fig. 4 schematically illustrates an example sequence of transaction buckets, in accordance with one or more aspects of the present disclosure;
Fig. 5 schematically illustrates an example workflow for disposal and acquisition transaction matching, in accordance with one or more aspects of the present disclosure;
Figs. 6A-6B schematically illustrate appending the next acquisition transaction to a subset of matched acquisition transactions, in accordance with one or more aspects of the present disclosure;
Figs. 7A-7B depict a flow diagram of an example method of gain and loss computation for cryptocurrency transactions, in accordance with one or more aspects of the present disclosure;
Fig. 8 depicts a flow diagram of an example method of disposal and acquisition transaction matching, in accordance with one or more aspects of the present disclosure;
Fig. 9 schematically illustrates a component diagram of an example wireless lighting control network node operating in accordance with one or more aspects of the present disclosure.

### DETAILED DESCRIPTION

Described herein are systems and methods for gain and loss computations for cryptocurrency transactions.

Certain transactions in cryptocurrency, such as crypto asset disposals, may represent taxable events. While taxation rules are usually jurisdiction-dependent, an asset disposal transaction would usually entail realization of gain or loss, which generally represents a taxable event in various jurisdictions, including, e.g., the United States.

In order to compute the gain or loss associated with a given set of cryptocurrency transactions, the computing system implementing the systems and methods described herein may receive transaction records related to cryptocurrency trades and transfers performed by a single person (e.g., a natural person or a corporation) or a group of affiliated persons via one or more cryptocurrency accounts associated with one or more cryptocurrency trading platforms. The raw set of transaction records may be received from the cryptocurrency trading platforms and/or from one or more customer accounting platforms.

The computing system may then parse the received raw transaction records. Based on the extracted transaction information, the computing system may determine the transaction types, amounts, currencies, timestamps, and other relevant information carried by the transaction records being analyzed. In various illustrative examples, the transaction types include: acquisition transactions, disposal transactions, deposit transactions, withdrawal transaction, fee payment transactions, and/or various other types.

The computing system may translate the received raw transaction records into a set of normalized atomic transaction records conforming to a predetermined format optimized for subsequent processing. In an illustrative example, each atomic transaction record would include the source account identifier, the destination account identifier, the asset identifier, the transaction amount (e.g., represented by a positive value of an acquisition transaction and a negative value for a disposal transaction), and a timestamp.

The computing system may then assign each transaction record to one or more accounting perimeters (formed, e.g., by accounts, sub-accounts, and/or other transaction attributes), such that only perimeter-crossing transactions will be considered for the purposes of gain and loss computation. In the simplest example, all customer's accounts may be considered as forming a single accounting perimeter, and thus any transaction transferring an asset between two customer's accounts will not be considered as a perimeter-crossing transaction, and will therefore be excluded from the gain and loss computation. In various other illustrative examples, the customer may define multiple accounting perimeters based on sub-accounts and/or other transaction attributes, such that the accounting perimeters may be at least partially intersecting and/or nested.

For each accounting perimeter, the computing system may associate the transactions with corresponding transaction buckets of transaction bucket sequences which are formed based on predetermined accounting period durations, such that for a given accounting period duration (e.g., one month, one quarter, one year, etc.), the set of transactions related to a certain asset and associated with a certain accounting perimeter is split into a sequence of transaction buckets, in which each bucket stores a subset of transactions having the their respective timestamps falling between the bucket start time and the bucket end time. Accordingly, a separate sequence of buckets would be created for each combination of asset identifier, perimeter identifier, and accounting period duration.

The transactions within each sequence of buckets may then be processed, bucket-by-bucket, such that one or more acquisition transactions would be matched to each disposal transaction; the matched acquisition transactions may include at least one partial transaction. For each disposal transaction and the matched acquisition transactions, the resulting gain or loss may be computed, as described in more detail herein below.

Thus, the present disclosure provides efficient methods of gain and loss computations for cryptocurrency transactions, which are described in more detail herein below. The systems and methods described herein may be implemented by hardware (e.g., general purpose and/or specialized processing devices, and/or other devices and associated circuitry), software (e.g., instructions executable by a processing device), or a combination thereof. Various aspects of the above referenced methods and systems are described in detail herein below by way of examples, rather than by way of limitation.

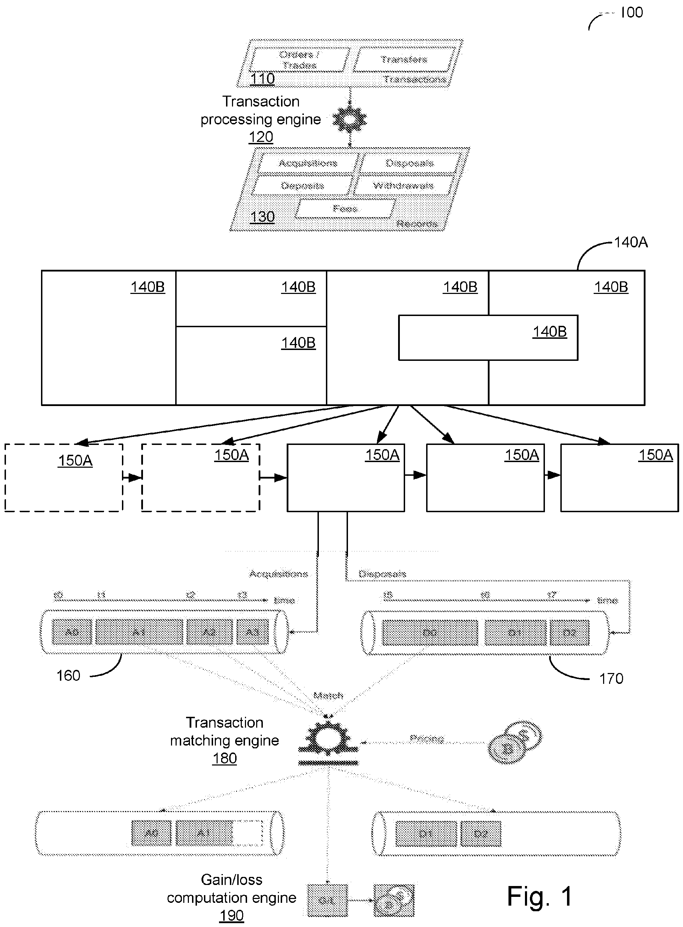

Fig. 1 schematically illustrates an example workflow 100 of computing gain or loss for cryptocurrency transactions. As schematically illustrated by Fig. 1, the computing system implementing the systems and methods described herein may receive a stream of raw transaction records 110 which are related to cryptocurrency trades and transfers performed by a single person or a group of affiliated persons via one or more cryptocurrency accounts associated with one or more cryptocurrency trading platforms. The raw transaction records 110, which may be received from the cryptocurrency trading platforms and/or from one or more customer accounting applications and may appear in various formats, are then processed by the transaction processing engine 120. The transaction processing engine 120 may be implemented by one or more software modules running in one or more dedicated virtual or physical execution environments (e.g., virtual or physical servers) or collocated with other servers or applications. The transaction processing engine 120 may implement a parser which may extract, from a given transaction record, the transaction source and destination accounts, the transaction amount(s), the transaction asset(s), the timestamp, and/or various other information. Based on the extracted information, the transaction processing engine 120 may determine the transaction type associated with the transaction record being analyzed. In various illustrative examples, the transaction types include: acquisition transactions, disposal transactions, deposit transactions, withdrawal transaction, fee payment transactions, and/or various other types.

The transaction processing engine 120 may further perform pre-processing of the transaction records, which may involve converting the input raw transaction records into a set of normalized atomic transactions 130 conforming to a certain format optimized for further processing. Each normalized transaction may reflect a transfer of a specified amount of a specified asset from a source account to a destination account, which was recorded at the time identified by the transaction timestamp.

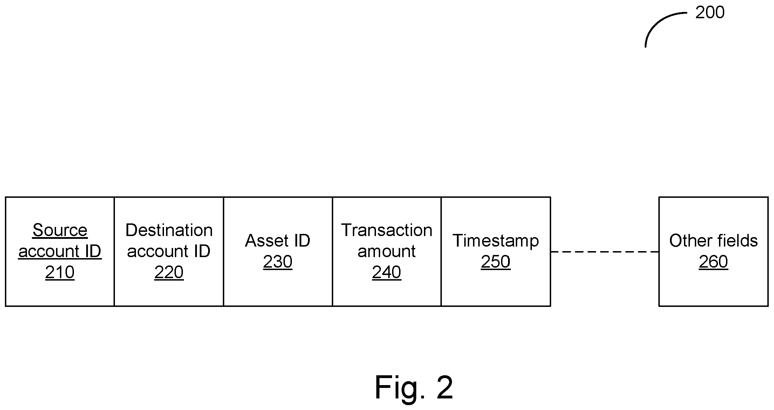

As schematically illustrated by Fig. 2, each normalized transaction record 200 may include the source account identifier 210, the destination account identifier 220, the asset identifier 230, the transaction amount 240, and a timestamp 250. The transaction amount 240 may be represented by a positive value of an acquisition transaction or a negative value for a disposal transaction. The transaction record 200 may include various other fields 260, such as one or more sub-account identifiers and/or other transaction attributes.

In an illustrative example, transaction pre-processing may further involve validating and normalizing asset identifiers (e.g., by comparing an asset identifier specified by a transaction record to a dictionary of asset identifiers). In another illustrative example, transaction pre-processing may further involve validating and/or modifying various other transaction record fields (e.g., comparing a sub-account identifier to a set of sub-accounts defined by a relevant chart of accounts or assigning a sub-account identifier by applying a rule processing one or more transaction attributes specified by certain transaction record fields).

The normalized atomic transaction records 130 may be stored in one or more files residing in a volatile and/or non-volatile memory. The operations of receiving and processing the raw transaction records may be repeated periodically or may be triggered by certain events.

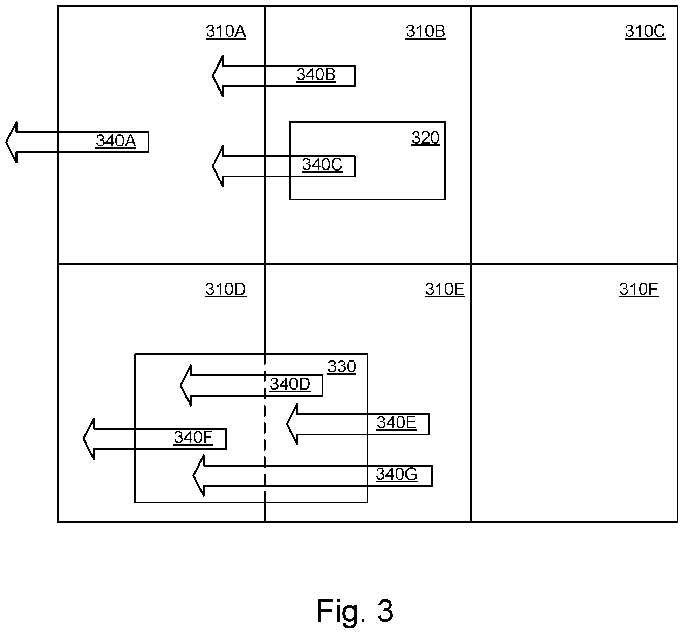

The transaction processing engine 120 may further assign each normalized atomic transaction 130 to one or more accounting perimeters 140A-140N. An accounting perimeter may be defined by a set of rules, such that each rule compares the values of certain transaction record fields (e.g., account identifiers, sub-account identifiers, and/or other transaction attributes) to one or more predetermined values, and produces identifiers of one or more accounting perimeters to which the transaction should be assigned. As schematically illustrated by Fig. 3, the accounting perimeters may intersect and/or may be fully nested one into another. In the illustrative example of Fig. 3, the outer accounting perimeter 300 corresponds to all cryptocurrency trading accounts held by a customer on one or more cryptocurrency trading platforms, and thus is formed by a union of accounting perimeters 310A-310F, each of which corresponds to a certain cryptocurrency trading account held by the customer. The accounting perimeter 320 corresponds to a certain subaccount of the cryptocurrency trading account forming the accounting perimeter 310B, and thus is fully nested into the accounting perimeter 310B. The accounting perimeter 330 corresponds to certain transactions performed by the cryptocurrency trading accounts forming the accounting perimeters 310D and 310E, and thus partially intersects with each of the accounting perimeters 310D and 310E.

As noted herein above, only perimeter-crossing transactions should be considered for the purposes of gain and loss computation, since a transaction happening within a single accounting perimeter does not affect the total amount of assets held by one or more accounts forming the accounting perimeter, and thus cannot be considered as creating a gain or loss for that accounting perimeter. Conversely, if at least two accounting perimeters are nested or intersect, a single transaction may be assigned to each of those perimeters. In the illustrative example of Fig. 3, the transaction 340A transfers assets from the cryptocurrency trading account forming the accounting perimeter 310A to an external account outside of the outer accounting perimeter 300, and thus will be assigned to the outer accounting perimeter 300 and the nested accounting perimeter 310A. The transaction 340B transfers assets from the cryptocurrency trading account forming the accounting perimeter 310B to the cryptocurrency trading account forming the accounting perimeter 310A, and thus will be assigned to the accounting perimeters 310A and 310B. The transaction 340C transfers assets from the cryptocurrency trading account forming the accounting perimeter 320 to the cryptocurrency trading account forming the accounting perimeter 310A, and thus will be assigned to the accounting perimeters 310A, 310B, and 320. The transaction 340D transfers assets from the cryptocurrency trading account forming the accounting perimeter 310E to the cryptocurrency trading account forming the accounting perimeter 310D, and thus will be assigned to the accounting perimeters 310D and 310E, but will not be assigned to the accounting perimeter 330, since the accounting perimeter 330 encompasses the source and destination of the transaction 340D. The transaction 340E transfers assets from the cryptocurrency trading account forming the accounting perimeter 310E to the cryptocurrency trading account forming the accounting perimeter 330, and thus will be assigned to the accounting perimeters 310E and 330. The transaction 340F transfers assets from the cryptocurrency trading account forming the accounting perimeter 330 to the cryptocurrency trading account forming the accounting perimeter 310D, and thus will be assigned to the accounting perimeters 310D and 330. The transaction 340G transfers assets from the cryptocurrency trading account forming the accounting perimeter 310E to the cryptocurrency trading account forming the accounting perimeter 330, and thus will be assigned to the accounting perimeters 310D, 310E, and 330.

Notably, the transaction amount will be positive for the accounting perimeter(s) which are formed by accounts (subaccounts) being the destination of the transaction. Conversely, the transaction amount will be negative for the accounting perimeter(s) which are formed by accounts (subaccounts) being the source of the transaction.

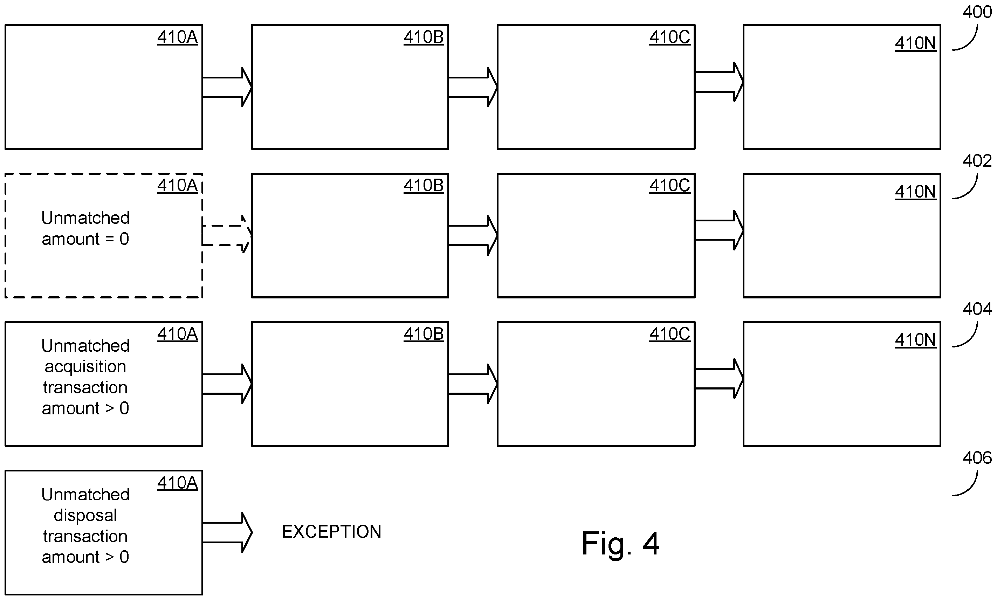

For each accounting perimeter, the transaction processing engine 120 may associate the transactions with two or more accounting periods of a predetermined duration. As schematically illustrated by Fig. 4, for a given accounting period duration (e.g., one month, one quarter, one year, etc.), the set of transactions related to a certain asset and associated with a certain accounting perimeter may be split into a sequence 400 of buckets 410A-410N, such that each bucket would held a subset of transactions that were in a corresponding accounting period. Thus, for a given account perimeter, multiple sequences of buckets may be created, such that each sequence would include buckets corresponding to a certain accounting period duration. Accordingly, a separate sequence of buckets would be created for each combination of asset identifier, perimeter identifier, and accounting period duration.

The transactions within each sequence of buckets may then be processed by a transaction matching engine 160, which would, for each bucket, match one or more acquisition transactions to each disposal transaction. The transaction matching engine 160 may be implemented by one or more software modules running in one or more dedicated virtual or physical execution environments (e.g., virtual or physical servers) or collocated with other servers or applications.

As disposal transactions may represent taxable events (i.e., gain or loss may be realized as the result of disposing of previously acquired cryptocurrency assets), a disposal transaction may only be matched with one or more acquisition transactions which occurred before the disposal transaction, unless the disposal transaction is a margin trade transaction or the underlying asset is a certain type of derivative asset (e.g., an option or futures contract).

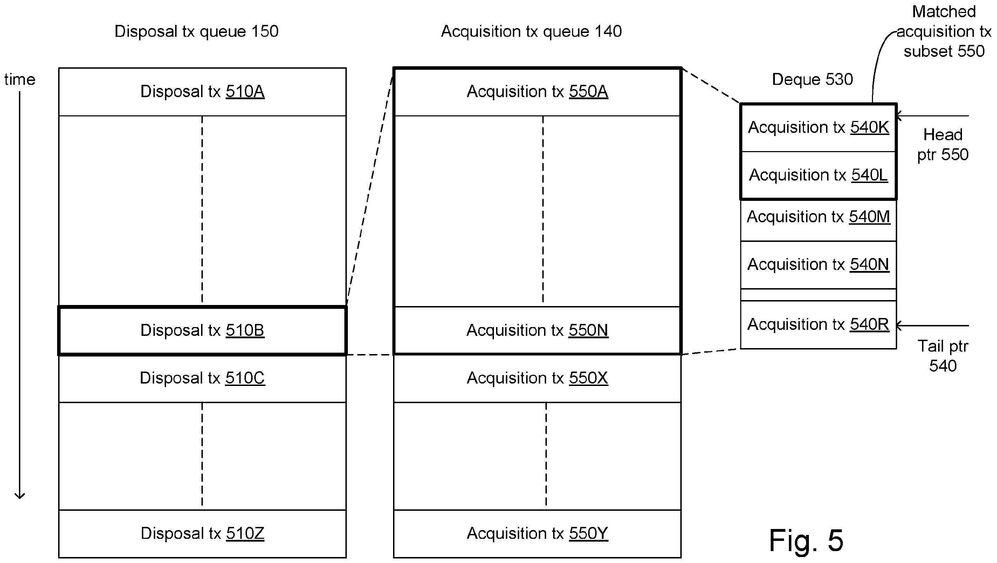

Accordingly, as schematically illustrated by Fig. 5, the transaction matching engine 160 may traverse the disposal transaction queue 150 starting from the least recent transactions, and for each disposal transaction 510 (e.g., for disposal transaction 510B) may select a subset of acquisition transactions 550A-550N from the acquisition transaction queue 140, such that the timestamp of each identified acquisition transaction 550A-550N is less than the timestamp of the currently selected disposal transaction 510B.

In certain implementations, the transaction queues 140 and 150 may be implemented by a data structure implementing the priority queue abstract data type. A priority queue is a list of elements, each of which has a "priority" value associated with it, such that an element with a higher priority would be retrieved before an element with a lower priority. The priority queue abstract data type may be implemented by a heap, which is a tree-based data structure, in which the priority value of the parent node P is greater than or equal (or less than or equal, depending upon a particular implementation) than the priority value of the node C which is a child of the node P. Thus, the highest (or lowest) priority element is always stored at the root of the heap. Accordingly, the transaction queues 140 and 150 may be implemented by a heap, in which the priorities of elements are represented by their respective timestamps.

Since both transaction queues 140 and 150 are sorted in the ascending order of transaction timestamps, the transaction matching engine 160 may traverse the acquisition queue 140 starting from the least recent transactions until an acquisition transaction 550X is identified, such that the timestamp of the acquisition transaction 550X exceeds or is equal to the timestamp of the currently selected disposal transaction 510B. Accordingly, all the acquisition transactions 550A-550N in the acquisition queue 140, starting from the least recent transaction 550A and including the transaction 550N which precedes the identified transaction 550X (whose timestamp exceeds or is equal to the timestamp of the currently selected disposal transaction 510B), may be considered as the candidate acquisition transactions for matching with the currently selected disposal transaction 510B.

For improving the efficiency of computations, the transaction matching engine 160 may append the identified acquisition transactions 550A-550N to a double-ended queue (deque) 530 which may reside in the random access memory (RAM) of the computer system running the transaction matching engine 160, thus creating acquisition transactions 540K-540R in the deque 530. While the example implementations herein are described with references to a double-ended queue, a doubly linked list (also referred to as "double-linked list"), a priority queue (e.g., a heap), or another suitable data structure may be employed instead of the deque 530. In a doubly linked list, each list element includes a reference (e.g., a pointer, an address offset or an index into the array implementing the list) to the next element of the list and a reference to the previous element of the list.

The deque 530 may be represented by a queue, to/from which the elements may be added/removed from either the head or the tail of the queue. The deque 530 may preserve the sorting order of the acquisition queue 140, i.e., may store the acquisition transactions sorted in the ascending order of their timestamps. The transaction matching process may thus involve initializing with zero value the running total amount of matched acquisition transactions and traversing the deque 530 in order to identify one or more full or partial acquisitions transactions such that their total amount would be equal to the amount of the currently selected disposal transaction 510B.

In an illustrative example, the relevant accounting rule may prescribe selecting the most recent acquisition transaction first for matching with a given disposal transaction (i.e., last in - first out (LIFO) matching rule). Accordingly, the transaction matching engine 160 may traverse the deque 530 starting from its tail 540.

In another illustrative example, the relevant accounting rule may prescribe selecting the least recent acquisition transaction first for matching with a given disposal transaction (i.e., first in - first out (FIFO) matching rule). Accordingly, the transaction matching engine 160 may traverse the deque 530 starting from its head 550.

Traversing the deque 530 may involve selecting, according to the traversal order, the next available acquisition transaction 540M and comparing the amount of the currently selected acquisition transaction 540M to the difference between the amount of the currently selected disposal transaction 510B and the running total amount of matched acquisition transactions 540K-540L.

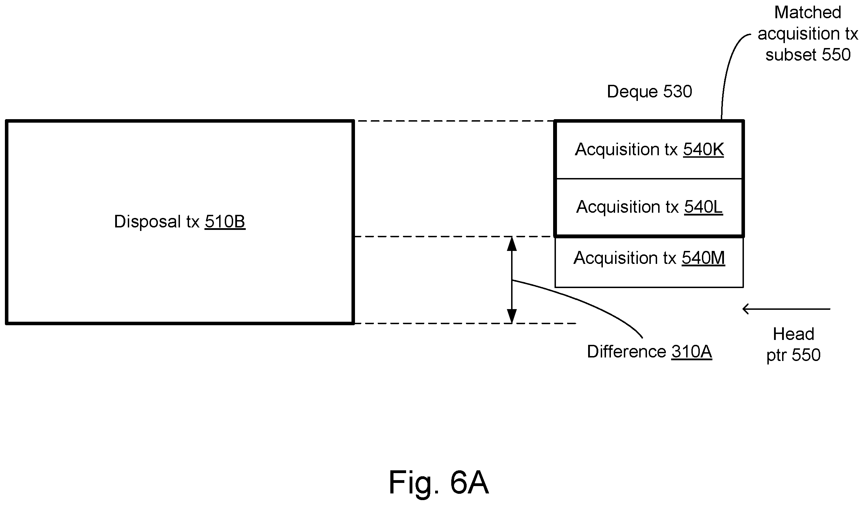

As schematically illustrated by Fig. 6A, should the amount of the currently selected acquisition transaction 540M be found less than or equal to the difference 310A between the amount of the currently selected disposal transaction 510B and the running total amount of matched acquisition transactions 540K-540L, the transaction 540M is added to the subset 550 of matched acquisition transactions. Accordingly, the amount of the currently selected acquisition transaction 540M is added to the running total amount of matched acquisition transactions 540K-540L. Thus, the currently selected acquisition transaction 540M is removed from the deque 530, and the head pointer 550 is advanced to point to the transaction that follows the transaction 540M in the deque 530.

Accordingly, should the total amount of matched acquisition transactions 540K-540M after performing the matching operation fall short of the amount of the currently selected disposal transaction 510B, the current acquisition transaction pointer in the deque 530 is advanced to point to the next acquisition transaction, and the next matching iteration is performed for the next acquisition transaction. Otherwise, should performing the matching operation set the running total amount of matched acquisition transactions 540K-540M equal to the amount of the currently selected disposal transaction 510B, the current transaction pointer in the disposal queue 150 is advanced to point to the next disposal transaction 510C, and the matching operations are performed for the next disposal transaction 510C.

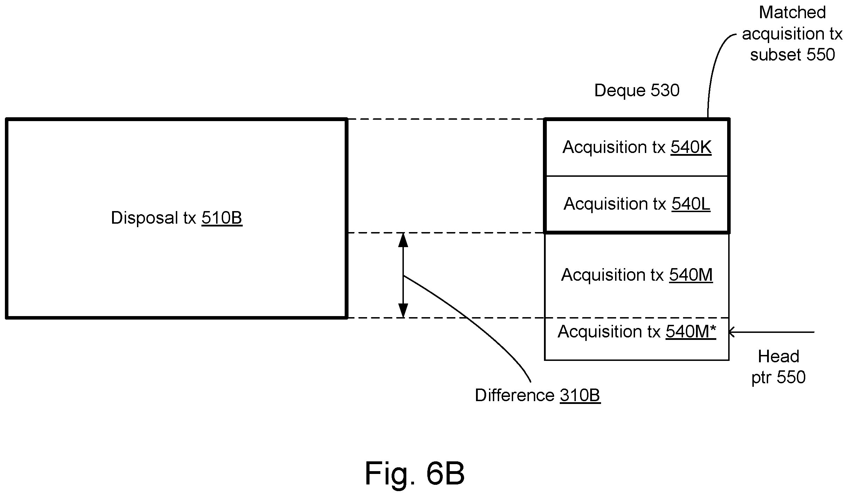

Conversely, as schematically illustrated by Fig. 6B, should the amount of the currently selected acquisition transaction 540M be found exceeding the difference between the amount of the currently selected disposal transaction 510B and the running total amount of matched acquisition transactions 540K-540L, the amount of transaction 540M is reduced by is split into two parts, such that the amount of the first part is equal to the difference 310B between the amount of the currently selected disposal transaction 510B and the running total amount of matched acquisition transactions 540K-540L, while the amount of the second part is equal to the remainder of the initial amount of the transaction 540M. Accordingly, the amount of the first part of the transaction 540M is added to the running total amount of matched acquisition transactions 540K-540L, the amount of the currently selected acquisition transaction 540M is reduced by the difference between the amount of the currently selected disposal transaction 510B and the running total amount of matched acquisition transactions 540K-540L. Thus, the modified transaction 540M* is left in the deque 530, and the head pointer 550 is advanced to point to the modified transaction 540M*.

Thus, should the total amount of matched acquisition transactions 540K-540M after performing the matching operation fall short of the amount of the currently selected disposal transaction 510B, the next acquisition transaction 520N is selected from the data structure storing the unmatched acquisition transactions, and the next matching iteration is performed for the next acquisition transaction.

Otherwise, should performing the matching operation set the running total amount of matched acquisition transactions 540K-540M equal to the amount of the currently selected disposal transaction 510B, the next disposal transaction is selected for matching, and the matching operations are performed for the newly selected disposal transaction, until all disposal transaction in the current bucket are processed.

Thus, there are three possible outcomes of processing a bucket of transactions: (a) all acquisition transactions have been matched to disposal transactions, and no disposal transactions have been left in the bucket; (b) one or more at least partially unmatched acquisition transactions have been left in the bucket, while no disposal transactions have been left in the bucket; and (c) all acquisition transactions have been matched to disposal transactions, but one or more at least partially unmatched disposal transactions have been left in the bucket.

The outcome (a) indicates that the current transaction bucket has been fully processed (unmatched amount =0), and the transaction matching engine 160 may proceed to processing the next transaction bucket from the sequence of transaction buckets. Referring again to Fig. 4, the outcome (a) is schematically illustrated by the sequence 402.

The outcome (b) indicates that all disposal transactions from the current transaction bucket have been fully processed. The remaining acquisition transactions may be appended to the next transaction bucket to be processed by the transaction matching engine 160. Referring again to Fig. 4, the outcome (a) is schematically illustrated by the sequence 404.

The outcome (c) indicates that the current transaction bucket contains incorrect or incomplete transaction data, since all disposal transactions should be matched with one or more acquisition transactions which occurred before the disposal transaction, unless the disposal transaction is a margin trade transaction or the underlying asset is a certain type of derivative asset (e.g., an option or futures contract). Therefore, the presence of unmatched disposal transactions while all acquisition transactions of the transaction bucket have been matched indicates that the current transaction bucket contains incorrect (incorrect amounts of one or more transactions) or incomplete (e.g., missing acquisition transactions) transaction data. Referring again to Fig. 4, the outcome (a) is schematically illustrated by the sequence 406.

Accordingly, responsive to determining that all acquisition transactions are matched to disposal transactions, but one or more at least partially unmatched disposal transactions are left in the bucket, the transaction processing engine may throw an exception, which may be processed in a variety of ways. In an illustrative example, an error message may be displayed via a graphical user interface (GUI) and/or logged, by which the user may be prompted to verify and adjust the transaction data in the current transaction bucket. In an illustrative example, a message may be sent to the transaction processing engine 120 prompting it to repeat the raw data retrieval and processing for the current transaction bucket. Responsive to receiving, from the transaction processing engine, a message indicating that the current transaction bucket has been modified, the transaction matching engine 160 may repeat processing of the current transaction bucket.

Upon successfully processing the current transaction bucket, the transaction matching engine 160 may select the next transaction bucket from the sequence of transaction buckets that is currently being processed, and repeat the above-described transaction matching operations for the newly selected transaction bucket.

Referring again to Fig. 1, for each disposal transaction and the matched acquisition transactions, the gain or loss may be computed by the gain/loss computation engine 170, which may be implemented by one or more software modules running in one or more dedicated virtual or physical execution environments (e.g., virtual or physical servers) or collocated with other components of the system. The gain/loss computation may involve determining, for each of the matched disposal and acquisition transactions, the transaction amount in a chosen fiat currency (e.g., U.S. dollars) based on the historic price of the cryptocurrency which has been acquired or disposed by the transaction. "Historic price" herein shall refer to the price which was effective at the time of performing the corresponding disposal or acquisition transaction. Upon determining the historic price-based transaction amounts in the chosen fiat currency, the gain/loss computation engine 170 may compute, for each disposal transaction and the matched acquisition transactions, the resulting gain or loss, by summing up the fiat currency amount of the disposal transaction and the fiat currency amounts of the matched acquisition transactions, such that a positive result would indicate a gain while a negative result would indicate a loss (assuming that the disposal transaction amount is positive, while acquisition transaction amounts are negative).

The computed gains or losses for the matched transactions, as well as other relevant data, may be summarized in one or more reports of various fixed or user-defined formats. The reports may be visually rendered via a graphical user interface (GUI), saved to one or more files, and/or printed. In an illustrative example, the reports may be formatted for rendering via a GUI of a portable computing device (such as a smartphone or a tablet).

In certain implementations, the computing system 100 implementing the methods described herein may utilize the computed gain or losses, as well as other relevant data, for producing one or more electronic tax accounting forms, which may be reviewed and electronically signed by the user. Upon obtaining the user's electronic signature, the computing system 100 may upload the electronic tax accounting forms to a server of a government agency which is authorized to accept electronic tax form filings.

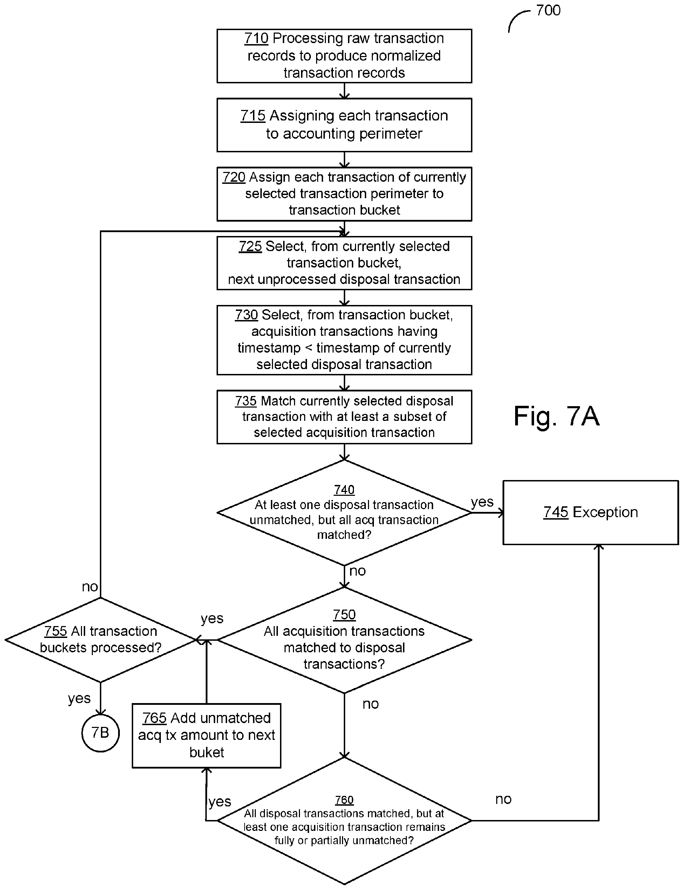

Figs. 7A-7B depict a flow diagram of an example method 700 of gain and loss computation for cryptocurrency transactions, in accordance with one or more aspects of the present disclosure. Method 700 and/or each of its individual functions, routines, subroutines, or operations may be performed by one or more processors of a computing system (e.g., the example computing system 500 of Fig. 5) implementing the method. In certain implementations, method 700 may be performed by a single processing thread. Alternatively, method 700 may be performed by two or more processing threads, each thread executing one or more individual functions, routines, subroutines, or operations of the method. In an illustrative example, the processing threads implementing method 700 may be synchronized (e.g., using semaphores, critical sections, and/or other thread synchronization mechanisms). Alternatively, the processing threads implementing method 700 may be executed asynchronously with respect to each other.

As schematically illustrated by Fig. 7A, at block 710, the computing system implementing the method may receive a plurality of cryptocurrency transaction records related to cryptocurrency trades and transfers performed by a single person (e.g., a natural person or a corporation) via one or more cryptocurrency accounts associated with one or more cryptocurrency exchanges and/or other organizations that perform cryptocurrency transactions. The computing system may translate the received raw transaction records into a set of normalized atomic transaction records conforming to a predetermined format optimized for subsequent processing. In an illustrative example, each atomic transaction record would include the source account identifier, the destination account identifier, the asset identifier, the transaction amount (e.g., represented by a positive value of an acquisition transaction and a negative value for a disposal transaction), and a timestamp, as described in more detail herein above.

At block 715, the computing system may assign each normalized transaction to one or more accounting perimeters associated with one or more cryptocurrency trading accounts of a customer (e.g., represented a single person (e.g., a natural person or a corporation) or an affiliated group of persons). An accounting perimeter may be defined by a set of rules, such that each rule compares the values of certain transaction record fields (e.g., account identifiers, sub-account identifiers, and/or other transaction attributes) to one or more predetermined values, and produces identifiers of one or more accounting perimeters to which the transaction should be assigned, as described in more detail herein above.

At block 720, the computing system may assign each transaction of the currently selected transaction perimeter to a transaction bucket, such that the transaction timestamp would fall within the accounting period identified by the bucket start time and the bucket end time, as described in more detail herein above.

At blocks 725-760, the computing system may iterate over the sequence of transaction buckets of a given transaction perimeter. In particular, at block 725, the computing system may select, from the currently selected transaction bucket, the next unprocessed cryptocurrency disposal transaction.

At block 730, the computing system may select, from the currently selected transaction bucket, one or more cryptocurrency acquisition transactions, such that the timestamp of each selected cryptocurrency acquisition transaction is less than the timestamp of the currently selected cryptocurrency disposal transaction, as described in more detail herein above.

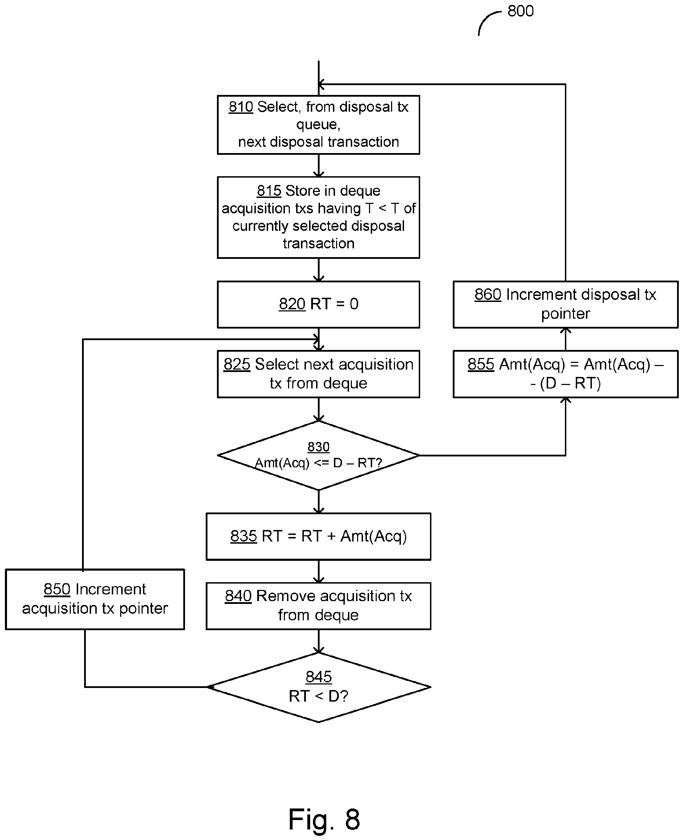

At block 735, the computing system may match the currently selected cryptocurrency disposal transaction with at least a subset of the selected cryptocurrency acquisition transactions, as described in more detail herein below with references to Fig. 8.

Responsive to determining, at block 740, that at least one disposal transaction from the current transaction bucket remains at least partially unmatched, while all acquisition transactions from the current bucket have been matched, the computing system may, at block 745, throw an exception, which may be processed in a variety of ways. In an illustrative example, an error message may be displayed via a GUI and/or logged, by which the user may be prompted to verify and adjust the transaction data in the current transaction bucket. In an illustrative example, a message may be sent to the transaction processing engine prompting it to repeat the raw data retrieval and processing for the current transaction bucket, as described in more detail herein above.

Otherwise, responsive to determining, at block 750, that all disposal transactions from the current transaction bucket have been matched to acquisition transactions, but at least one acquisition transaction from the current transaction bucket remains fully or partially unmatched, the processing may continue at block 755; otherwise, the method may branch to block 760.

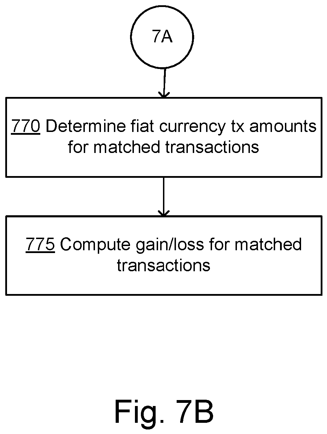

Responsive to determining, at block 750, that all available transaction buckets have been processed, the processing may continue at block 770 of Fig. 7B; otherwise, the method may loop back to block 725.

As schematically illustrated by Fig. 7B, at block 770, the computing system may determine, for each of the matched transactions, a corresponding fiat currency transaction amount, based on the historic price of the cryptocurrency which has been acquired or disposed by the respective transaction, as described in more detail herein above.

At block 775, the computing system may compute, based on the determined fiat currency transaction amounts, the gain or loss associated with the currently selected cryptocurrency disposal transaction.

Fig. 8 depicts a flow diagram of an example method 800 of disposal and acquisition transaction matching, in accordance with one or more aspects of the present disclosure. Method 800 and/or each of its individual functions, routines, subroutines, or operations may be performed by one or more processors of a computing system (e.g., the example computing system 500 of Fig. 5) implementing the method. In certain implementations, method 800 may be performed by a single processing thread. Alternatively, method 800 may be performed by two or more processing threads, each thread executing one or more individual functions, routines, subroutines, or operations of the method. In an illustrative example, the processing threads implementing method 800 may be synchronized (e.g., using semaphores, critical sections, and/or other thread synchronization mechanisms). Alternatively, the processing threads implementing method 800 may be executed asynchronously with respect to each other.

At block 810, the computing system implementing the method may select, from a disposal transaction queue or other suitable data structure, the next unprocessed disposal transaction.

At block 815, the computing system implementing the method may, for the currently selected disposal transaction, select a subset of acquisition transactions from the acquisition transaction queue, such that the timestamp of each identified acquisition transaction is less than the timestamp of the currently selected disposal transaction. The selected subset of cryptocurrency acquisition transactions may be stored in a queue, linked list, or other suitable memory data structure in the ascending order of the respective transaction timestamps.

At block 820, the computing system may initialize with zero value the running total amount of matched cryptocurrency acquisition transactions.

At block 825, the computing system may select the next available acquisition transaction, by traversing, in the direction defined by the applicable accounting rule (FIFO or LIFO), the data structure storing the selected subset of cryptocurrency acquisition transactions.

Responsive to determining, at block 830, that the amount of the selected cryptocurrency acquisition transaction is less than or equal to the difference between the amount of the selected cryptocurrency disposal transaction and the running total amount of matched cryptocurrency acquisition transactions, the computing system may, at block 835, add the amount of the selected cryptocurrency acquisition transaction to the running total amount of matched cryptocurrency acquisition transactions; otherwise, the processing may continue at block 855.

At block 840, the computing system may remove the currently selected cryptocurrency acquisition transaction from the data structure storing the selected subset of cryptocurrency acquisition transactions.

Responsive to determining, at block 845, that the running total amount of matched cryptocurrency acquisition transactions falls short of the amount of the currently selected cryptocurrency disposal transaction, the computing system may, at block 850, advance the pointer referencing the next available cryptocurrency acquisition transaction in the data structure storing the selected subset of cryptocurrency acquisition transactions, and the method may loop back to 825.

Responsive to determining, at block 830, that the amount of the selected cryptocurrency acquisition transaction exceeds the difference between the amount of the selected cryptocurrency disposal transaction and the running total amount of matched cryptocurrency acquisition transactions, the computing system may, at block 855, reduce the amount of the selected cryptocurrency acquisition transaction by the difference between the amount of the selected cryptocurrency disposal transaction and the running total amount of matched cryptocurrency acquisition transactions.

At block 855, the computing system may advance the pointer referencing the next available cryptocurrency disposal transaction in the cryptocurrency disposal transaction queue, and the method may loop back to 810.

The systems and methods described herein may be employed for processing real or simulated data sets. In an illustrative example, the output produced by the systems and methods described herein may be employed for various cryptocurrency market simulation applications. e.g., cryptocurrency market simulation). In an illustrative example, the output produced by the systems and methods described herein may be employed for generating training data sets for various machine learning-based applications.

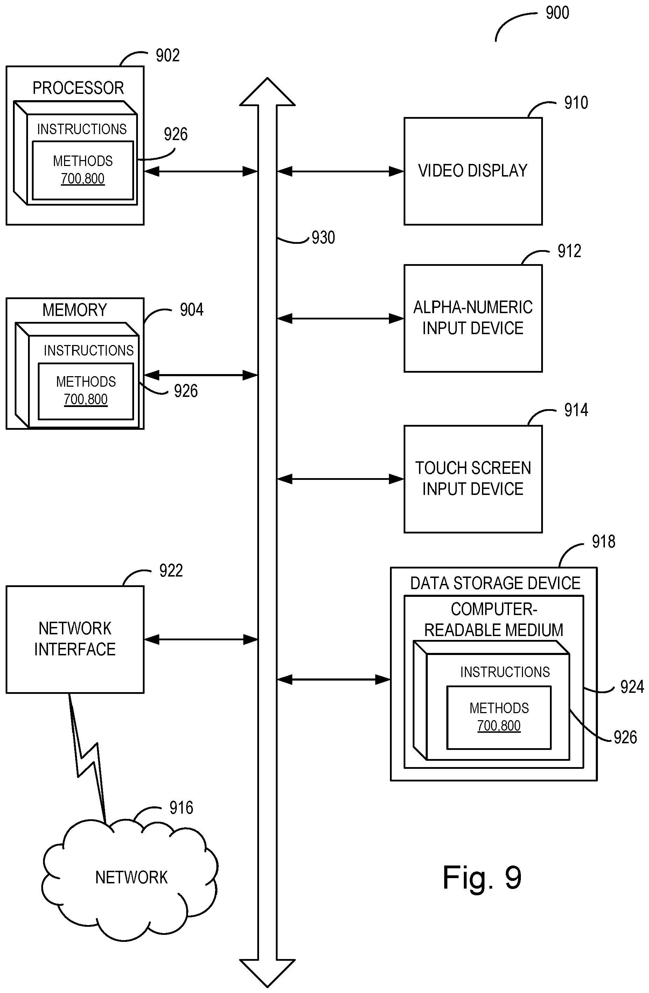

Fig. 9 depicts a component diagram of an example computing system which may be employed for implementing the methods described herein. The computing system 900 may be connected to other computing system in a LAN, an intranet, an extranet, or the Internet. The computing system 900 may operate in the capacity of a server or a client computing system in client-server network environment, or as a peer computing system in a peer-to-peer (or distributed) network environment. The computing system 900 may be a provided by a personal computer (PC), a tablet PC, a set-top box (STB), a Personal Digital Assistant (PDA), a cellular telephone, or any computing system capable of executing a set of instructions (sequential or otherwise) that specify operations to be performed by that computing system. Further, while only a single computing system is illustrated, the term "computing system" shall also be taken to include any collection of computing systems that individually or jointly execute a set (or multiple sets) of instructions to perform any one or more of the methods described herein.

Exemplary computing system 900 includes a processor 902, a main memory 904 (e.g., read-only memory (ROM) or dynamic random access memory (DRAM)), and a data storage device 918, which communicate with each other via a bus 930.

Processor 902 may be represented by one or more general-purpose processing devices such as a microprocessor, central processing unit, or the like. More particularly, processor 902 may be a complex instruction set computing (CISC) microprocessor, reduced instruction set computing (RISC) microprocessor, very long instruction word (VLIW) microprocessor, or a processor implementing other instruction sets or processors implementing a combination of instruction sets. Processor 902 may also be one or more special-purpose processing devices such as an application specific integrated circuit (ASIC), a field programmable gate array (FPGA), a digital signal processor (DSP), network processor, or the like. Processor 902 is configured to execute instructions 926 for performing the methods described herein.

Computing system 900 may further include a network interface device 922, a video display unit 910, a character input device 912 (e.g., a keyboard), and a touch screen input device 914.

Data storage device 919 may include a computer-readable storage medium 924 on which is stored one or more sets of instructions 926 embodying any one or more of the methods or functions described herein. Instructions 926 may also reside, completely or at least partially, within main memory 904 and/or within processor 902 during execution thereof by computing system 900, main memory 904 and processor 902 also constituting computer-readable storage media. Instructions 926 may further be transmitted or received over network 916 via network interface device 922.

In an illustrative example, instructions 926 may include instructions of methods 700, 800 of gain and loss computation for cryptocurrency transactions, implemented in accordance with one or more aspects of the present disclosure. While computer-readable storage medium 924 is shown in the example of Fig. 9 to be a single medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instructions for execution by the machine and that cause the machine to perform any one or more of the methods of the present disclosure. The term "computer-readable storage medium" shall accordingly be taken to include, but not be limited to, solid-state memories, optical media, and magnetic media.

The methods, components, and features described herein may be implemented by discrete hardware components or may be integrated in the functionality of other hardware components such as ASICS, FPGAs, DSPs or similar devices. In addition, the methods, components, and features may be implemented by firmware modules or functional circuitry within hardware devices. Further, the methods, components, and features may be implemented in any combination of hardware devices and software components, or only in software.

In the foregoing description, numerous details are set forth. It will be apparent, however, to one of ordinary skill in the art having the benefit of this disclosure, that the present disclosure may be practiced without these specific details. In some instances, well-known structures and devices are shown in block diagram form, rather than in detail, in order to avoid obscuring the present disclosure.

Some portions of the detailed description have been presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, graphemes, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "determining", "computing", "calculating", "obtaining", "identifying," "modifying" or the like, refer to the actions and processes of a computing system, or similar electronic computing system, that manipulates and transforms data represented as physical (e.g., electronic) quantities within the computing system's registers and memories into other data similarly represented as physical quantities within the computing system memories or registers or other such information storage, transmission or display devices.

The present disclosure also relates to an apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

It is to be understood that the above description is intended to be illustrative, and not restrictive. Various other implementations will be apparent to those of skill in the art upon reading and understanding the above description. The scope of the disclosure should, therefore, be determined with reference to the appended claims, along with the full scope of equivalents to which such claims are entitled.

## Claims

1. A method, comprising:
identifying a plurality of cryptocurrency trading transactions associated with an accounting perimeter of a plurality of accounting perimeters associated with one or more cryptocurrency trading accounts, wherein each cryptocurrency trading transaction of the plurality of cryptocurrency trading transactions is represented by one of: a cryptocurrency acquisition transaction or a cryptocurrency disposal transaction;
for a given accounting perimeter, assigning each cryptocurrency trading transaction associated with the accounting perimeter to a transaction bucket of a sequence of transaction buckets associated with the accounting perimeter, wherein each transaction bucket is identified by a start time and an end time, and wherein a transaction bucket of the sequence of transaction buckets is selected for assigning a cryptocurrency trading transaction of the plurality of cryptocurrency trading transactions to the transaction bucket based on a timestamp of the cryptocurrency trading transaction, such that the timestamp falls between the start time and the end time of the transaction bucket;
for each transaction bucket, matching each cryptocurrency disposal transaction associated with a given transaction bucket to at least a subset of a plurality of cryptocurrency acquisition transactions associated with the given transaction bucket, wherein the matching comprises:
traversing an acquisition transaction queue starting from a least recent cryptocurrency acquisition transaction associated with the given transaction bucket until a cryptocurrency acquisition transaction is identified having a timestamp exceeding or equal to a timestamp of a currently selected cryptocurrency disposal transaction associated with the given transaction bucket;
selecting, from the plurality of cryptocurrency acquisition transactions associated with the given transaction bucket, one or more cryptocurrency acquisition transactions starting from the least recent cryptocurrency acquisition transaction and including a cryptocurrency acquisition transaction that precedes the identified cryptocurrency acquisition transaction;
storing, in a double-ended queue, the selected one or more cryptocurrency acquisition transactions;
selecting a cryptocurrency acquisition transaction of the one or more cryptocurrency acquisition transactions by traversing the double-ended queue in a direction defined by an applicable accounting rule;
responsive to determining that an amount of the selected cryptocurrency acquisition transaction is less than or equal to a difference between an amount of the currently selected cryptocurrency disposal transaction and a running total amount of matched cryptocurrency acquisition transactions, adding the amount of the selected cryptocurrency acquisition transaction to the running total amount of matched cryptocurrency acquisition transactions;
determining, for each of the matched transactions, a corresponding fiat currency transaction amount; and
computing, using the fiat currency transaction amounts, one of: a gain associated with the cryptocurrency disposal transaction or a loss associated with the cryptocurrency disposal transaction.

2. The method of claim 1, wherein identifying the plurality of cryptocurrency trading transactions associated with the accounting perimeter further comprises:
applying one or more perimeter definition rules to a normalized transaction record.

3. The method of claim 2, wherein each perimeter definition rule produces an accounting perimeter identifier by comparing values of one or more fields of the normalized transaction records to corresponding predetermined values.

4. The method of any preceding claim, further comprising:
responsive to determining that all cryptocurrency acquisition transactions of the transaction bucket have been matched to cryptocurrency disposal transactions, and no cryptocurrency disposal transactions have been left in the transaction bucket, selecting a subsequent transaction bucket from the sequence of transaction buckets.

5. The method of any preceding claim, further comprising:
responsive to determining that at least one cryptocurrency acquisition transaction of the transaction bucket has not been fully matched to cryptocurrency disposal transactions, and no cryptocurrency disposal transactions have been left in the transaction bucket, adding an unmatched amount of the at least one cryptocurrency acquisition transaction to a subsequent transaction bucket from the sequence of transaction buckets.

6. The method of any preceding claim, further comprising:
responsive to determining that at least one cryptocurrency disposal transaction of the transaction bucket has not been fully matched to cryptocurrency acquisition transactions, throwing an exception.

7. The method of any preceding claim, further comprising:
responsive to determining that the amount of the cryptocurrency disposal transaction exceeds the running total amount of matched cryptocurrency acquisition transactions, selecting a next cryptocurrency acquisition transaction from the plurality of cryptocurrency acquisition transactions.

8. The method of any preceding claim, further comprising:
responsive to determining that an amount of the selected cryptocurrency acquisition transaction exceeds the difference between the amount of the cryptocurrency disposal transaction and the running total amount of matched cryptocurrency acquisition transactions, reducing the amount of the selected cryptocurrency acquisition transaction by the difference between the amount of the currently selected cryptocurrency disposal transaction and the running total amount of matched cryptocurrency acquisition transactions.

9. The method of any preceding claim, wherein the fiat currency transaction amount is based on a fiat currency price of a cryptocurrency identified by the transaction, wherein the fiat currency price was effective at a time identified by a timestamp of the transaction.

10. The method of any preceding claim, further comprising:
generating an electronic tax accounting form reflecting one of: the gain associated with the cryptocurrency disposal transaction or the loss associated with the cryptocurrency disposal transaction;
responsive to receiving, via a graphical user interface, an approval of the electronic tax accounting form, digitally signing the electronic tax accounting form; and
uploading the electronic tax accounting form to a server authorized to accept electronic tax form filings.

11. The method of any preceding claim, wherein the method is performed by two or more processing threads, each thread executing one or more individual operations of the method.

12. A data processing system comprising means for carrying out the method of any preceding claim.

13. A computer program product comprising instructions which, when the program is executed by a computer, cause the computer to carry out the method of any one of claims 1 to 11.

14. A computer-readable storage medium comprising instructions which, when executed by a computer, cause the computer to carry out the method of any one of claims 1 to 11.

## Patentansprüche

1. Verfahren, das Folgendes umfasst:
Identifizieren einer Vielzahl von Kryptowährungshandelstransaktionen, die mit einem Buchführungsumfang von einer Vielzahl von Buchführungsumfängen verknüpft sind, die mit einem oder mehreren Kryptowährungshandelskonten verknüpft sind, wobei jede Kryptowährungshandelstransaktion von der Vielzahl von Kryptowährungshandelstransaktionen durch eines von Folgendem dargestellt wird: eine Kryptowährungserwerbstransaktion oder eine Kryptowährungsveräußerungstransaktion,
für einen gegebenen Buchführungsumfang Zuweisen jeder Kryptowährungshandelstransaktion, die mit dem Buchführungsumfang verknüpft ist, zu einem Transaktionsbereich von einer Folge von Transaktionsbereichen, die mit dem Buchführungsumfang verknüpft sind, wobei jeder Transaktionsbereich durch einen Startzeitpunkt und einen Endzeitpunkt identifiziert wird und wobei ein Transaktionsbereich der Folge von Transaktionsbereichen zum Zuweisen einer Kryptowährungshandelstransaktion von der Vielzahl von Kryptowährungshandelstransaktionen zu dem Transaktionsbereich auf Grundlage eines Zeitstempels der Kryptowährungshandelstransaktion derart ausgewählt wird, dass der Zeitstempel zwischen den Startzeitpunkt und den Endzeitpunkt des Transaktionsbereichs fällt,
für jeden Transaktionsbereich Abgleichen jeder Kryptowährungsveräußerungstransaktion, die mit einem gegebenen Transaktionsbereich verknüpft ist, mit mindestens einer Teilmenge einer Vielzahl von Kryptowährungserwerbstransaktionen, die mit dem gegebenen Transaktionsbereich verknüpft sind, wobei das Abgleichen Folgendes umfasst:
Durchlaufen einer Erwerbstransaktionswarteschlange, beginnend von einer ältesten Kryptowährungserwerbstransaktion, die mit dem gegebenen Transaktionsbereich verknüpft ist, bis eine Kryptowährungserwerbstransaktion identifiziert wird, die einen Zeitstempel aufweist, der einen Zeitstempel einer gegenwärtig ausgewählten Kryptowährungsveräußerungstransaktion, die mit dem gegebenen Transaktionsbereich verknüpft ist, überschreitet oder demselben gleich ist,
Auswählen, aus der Vielzahl von Kryptowährungserwerbstransaktionen, die mit dem gegebenen Transaktionsbereich verknüpft sind, einer oder mehrerer Kryptowährungserwerbstransaktionen, beginnend von der ältesten Kryptowährungserwerbstransaktion und einschließlich einer Kryptowährungserwerbstransaktion, die der identifizierten Kryptowährungserwerbstransaktion vorausgeht,
Speichern, in einer doppelendigen Warteschlange, der ausgewählten einen oder mehreren Kryptowährungserwerbstransaktionen,
Auswählen einer Kryptowährungserwerbstransaktion von der einen oder den mehreren Kryptowährungserwerbstransaktionen durch Durchlaufen der doppelendigen Warteschlange in einer Richtung, die durch eine anwendbare Buchführungsregel definiert wird,
als Reaktion auf ein Feststellen, dass ein Betrag der ausgewählten Kryptowährungserwerbstransaktion geringer als oder so groß wie eine Differenz zwischen einem Betrag der gegenwärtig ausgewählten Kryptowährungsveräußerungstransaktion und einem laufenden Gesamtbetrag von abgeglichenen Kryptowährungserwerbstransaktionen ist, Addieren des Betrages der ausgewählten Kryptowährungserwerbstransaktion zu dem laufenden Gesamtbetrag von abgeglichenen Kryptowährungserwerbstransaktionen,
Bestimmen, für jede der abgeglichenen Transaktionen, eines entsprechenden Fiatwährungstransaktionsbetrages und
Berechnen, unter Verwendung der Fiatwährungstransaktionsbeträge, eines von Folgendem: eines Gewinns, der mit der Kryptowährungsveräußerungstransaktion verknüpft ist, oder eines Verlusts, der mit der Kryptowährungsveräußerungstransaktion verknüpft ist.

2. Verfahren nach Anspruch 1, wobei das Identifizieren der Vielzahl von Kryptowährungshandelstransaktionen, die mit dem Buchführungsumfang verknüpft sind, ferner Folgendes umfasst:
Anwenden einer oder mehrerer Umfangsdefinitionsregeln auf einen normalisierten Transaktionssatz.

3. Verfahren nach Anspruch 2, wobei jede Umfangsdefinitionsregel durch Vergleichen von Werten eines oder mehrerer Felder des normalisierten Transaktionssatzes mit entsprechenden vorbestimmten Werten eine Buchführungsumfangskennung hervorbringt.

4. Verfahren nach einem der vorhergehenden Ansprüche, das ferner Folgendes umfasst:
als Reaktion auf ein Feststellen, dass alle Kryptowährungserwerbstransaktionen des Transaktionsbereichs mit Kryptowährungsveräußerungstransaktionen abgeglichen worden sind und dass keine Kryptowährungsveräußerungstransaktionen in dem Transaktionsbereich übriggelassen worden sind, Auswählen eines nachfolgenden Transaktionsbereichs aus der Folge von Transaktionsbereichen.

5. Verfahren nach einem der vorhergehenden Ansprüche, das ferner Folgendes umfasst:
als Reaktion auf das Feststellen, dass mindestens eine Kryptowährungserwerbstransaktion des Transaktionsbereichs nicht vollständig mit Kryptowährungsveräußerungstransaktionen abgeglichen worden ist und dass keine Kryptowährungsveräußerungstransaktion in dem Transaktionsbereich übriggelassen worden sind, Hinzufügen eines nicht abgeglichenen Betrages der mindestens einen Kryptowährungserwerbstransaktion zu einem nachfolgenden Transaktionsbereich aus der Folge von Transaktionsbereichen.

6. Verfahren nach einem der vorhergehenden Ansprüche, das ferner Folgendes umfasst:
als Reaktion auf das Feststellen, dass mindestens eine Kryptowährungsveräußerungstransaktionen des Transaktionsbereichs nicht vollständig mit Kryptowährungserwerbstransaktionen abgeglichen worden ist, Auslösen einer Ausnahme.

7. Verfahren nach einem der vorhergehenden Ansprüche, das ferner Folgendes umfasst:
als Reaktion auf das Feststellen, dass der Betrag der Kryptowährungsveräußerungstransaktion den laufenden Gesamtbetrag von abgeglichenen Kryptowährungserwerbstransaktionen überschreitet, Auswählen einer nächsten Kryptowährungserwerbstransaktion von der Vielzahl von Kryptowährungserwerbstransaktionen.

8. Verfahren nach einem der vorhergehenden Ansprüche, das ferner Folgendes umfasst:
als Reaktion auf das Feststellen, dass ein Betrag der ausgewählten Kryptowährungserwerbstransaktion die Differenz zwischen dem Betrag der Kryptowährungsveräußerungstransaktion und dem laufenden Gesamtbetrag von abgeglichenen Kryptowährungserwerbstransaktionen überschreitet, Verringern des Betrages der ausgewählten Kryptowährungserwerbstransaktion um die Differenz zwischen dem Betrag der gegenwärtig ausgewählten Kryptowährungsveräußerungstransaktion und dem laufenden Gesamtbetrag von abgeglichenen Kryptowährungserwerbstransaktionen.

9. Verfahren nach einem der vorhergehenden Ansprüche, wobei der Fiatwährungstransaktionsbetrag auf einem Fiatwährungspreis einer durch die Transaktion identifizierten Kryptowährung beruht, wobei der Fiatwährungspreis zu einem durch einen Zeitstempel der Transaktion identifizierten Zeitpunkt gültig war.

10. Verfahren nach einem der vorhergehenden Ansprüche, das ferner Folgendes umfasst:
Erzeugen eines elektronischen Steuerbuchführungsformulars, das eines von Folgenden wiederspiegelt: den Gewinn, der mit der Kryptowährungsveräußerungstransaktion verknüpft ist, oder den Verlust, der mit der Kryptowährungsveräußerungstransaktion verknüpft ist,
als Reaktion auf ein Empfangen, über eine graphische Benutzerschnittstelle, einer Bestätigung des elektronischen Steuerbuchführungsformulars digitales Unterzeichnen des elektronischen Steuerbuchführungsformulars und
Hochladen des elektronischen Steuerbuchführungsformulars auf einen Server, der berechtigt ist, elektronische Steuerformulareinreichungen anzunehmen.

11. Verfahren nach einem der vorhergehenden Ansprüche, wobei das Verfahren durch zwei oder mehr Verarbeitungsstränge durchgeführt wird, wobei jeder Strang eine oder mehrere einzelne Operationen des Verfahrens ausführt.

12. Datenverarbeitungssystem, das Mittel zum Durchführen des Verfahrens nach einem der vorhergehenden Ansprüche umfasst.

13. Computerprogrammprodukt, das Anweisungen umfasst, die, wenn das Programm durch einen Rechner ausgeführt wird, veranlassen, dass der Rechner das Verfahren nach einem der Ansprüche 1 bis 11 durchführt.

14. Rechnerlesbares Speichermedium, das Anweisungen umfasst, die, wenn sie durch einen Rechner ausgeführt werden, veranlassen, dass der Rechner das Verfahren nach einem der Ansprüche 1 bis 11 durchführt.

## Revendications

1. Procédé, comprenant :
l'identification d'une pluralité de transactions de négoce de cryptomonnaie associées à un périmètre de comptabilité d'une pluralité de périmètres de comptabilité associés à un ou plusieurs comptes de négoce de cryptomonnaie, dans lequel chaque transaction de négoce de cryptomonnaie de la pluralité de transactions de négoce de cryptomonnaie est représenté par l'une parmi : une transaction d'acquisition de cryptomonnaie ou une transaction de cession de cryptomonnaie ;
pour un périmètre de comptabilité donné, l'assignation de chaque transaction de négoce de cryptomonnaie associée au périmètre de comptabilité à un compartiment de transaction d'une séquence de compartiments de transaction associés au périmètre de comptabilité, dans lequel chaque compartiment de transaction est identifié par une heure de début et une heure de fin, et dans lequel un compartiment de transaction de la séquence de compartiments de transaction est sélectionné pour assigner une transaction de négoce de cryptomonnaie de la pluralité de transactions de négoce de cryptomonnaie au compartiment de transaction sur la base d'une estampille temporelle de la transaction de négoce de cryptomonnaie, de telle sorte que l'estampille temporelle s'inscrit entre l'heure de début et l'heure de fin du compartiment de transaction ;
pour chaque compartiment de transaction, la mise en correspondance de chaque transaction de cession de cryptomonnaie associée à un compartiment de transaction donné avec au moins un sous-ensemble d'une pluralité de transactions d'acquisition de cryptomonnaie associées au compartiment de transaction donné, dans lequel la mise en correspondance comprend :
la traversée d'une file d'attente de transactions d'acquisition commençant à partir d'une transaction d'acquisition de cryptomonnaie moins récente associée au compartiment de transaction donné jusqu'à ce qu'une transaction d'acquisition de cryptomonnaie soit identifiée, qui présente une estampille temporelle supérieure ou égale à une estampille temporelle d'une transaction de cession de cryptomonnaie actuellement sélectionnée associée au compartiment de transaction donné ;
la sélection, à partir de la pluralité de transactions d'acquisition de cryptomonnaie associées au compartiment de transaction donné, d'une ou plusieurs transactions d'acquisition de cryptomonnaie commençant à partir de la transaction d'acquisition de cryptomonnaie la plus ancienne et incluant une transaction d'acquisition de cryptomonnaie qui précède la transaction d'acquisition de cryptomonnaie identifiée ;
le stockage, dans une file d'attente à double fonction, des une ou plusieurs transactions d'acquisition de cryptomonnaie sélectionnées ;
la sélection d'une transaction d'acquisition de cryptomonnaie parmi les une ou plusieurs transactions d'acquisition de cryptomonnaie en traversant la file d'attente à double fonction dans une direction définie par une règle de comptabilité applicable ;
en réponse à la détermination qu'un montant de la transaction d'acquisition de cryptomonnaie sélectionnée est inférieur ou égal à une différence entre un montant de la transaction de cession de cryptomonnaie actuellement sélectionnée et un montant total en cours de transactions d'acquisition de cryptomonnaie mises en correspondance, l'ajout du montant de la transaction d'acquisition de cryptomonnaie sélectionnée au montant total en cours de transactions d'acquisition de cryptomonnaie mises en correspondance ;
la détermination, pour chacune des transactions mises en correspondance, d'un montant de transaction en monnaie fiat correspondant ; et
le calcul, à l'aide des montants de transaction en monnaie fiat, de l'un parmi : un gain associé à la transaction de cession de cryptomonnaie ou une perte associée à la transaction de cession de cryptomonnaie.

2. Procédé selon la revendication 1, dans lequel l'identification de la pluralité de transactions de négoce de cryptomonnaie associées au périmètre de comptabilité comprend en outre :
l'application d'une ou plusieurs règles de définition de périmètre à un mouvement de transaction normalisé.

3. Procédé selon la revendication 2, dans lequel chaque règle de définition de périmètre produit un identifiant de périmètre de comptabilité en comparant des valeurs d'un ou plusieurs domaines des mouvements de transaction normalisés à des valeurs prédéterminées correspondantes.

4. Procédé selon l'une quelconque des revendications précédentes, comprenant en outre :
en réponse à la détermination que toutes les transactions d'acquisition de cryptomonnaie du compartiment de transaction ont été mises en correspondance avec des transactions de cession de cryptomonnaie, et qu'aucune transaction de cession de cryptomonnaie n'a été laissée dans le compartiment de transaction, la sélection d'un compartiment de transaction ultérieur parmi la séquence de compartiments de transaction.

5. Procédé selon l'une quelconque des revendications précédentes, comprenant en outre :
en réponse à la détermination qu'au moins une transaction d'acquisition de cryptomonnaie du compartiment de transaction n'a pas été entièrement mise en correspondance avec des transactions de cession de cryptomonnaie, et qu'aucune transaction de cession de cryptomonnaie n'a été laissée dans le compartiment de transaction, l'ajout d'un montant non mis en correspondance de l'au moins une transaction d'acquisition de cryptomonnaie avec un compartiment de transaction ultérieur parmi la séquence de compartiments de transaction.

6. Procédé selon l'une quelconque des revendications précédentes, comprenant en outre :
en réponse à la détermination qu'au moins une transaction de cession de cryptomonnaie du compartiment de transaction n'a pas été totalement mise en correspondance avec des transactions d'acquisition de cryptomonnaie, la génération d'une exception.

7. Procédé selon l'une quelconque des revendications précédentes, comprenant en outre :
en réponse à la détermination que le montant de la transaction de cession de cryptomonnaie dépasse le montant total en cours de transactions d'acquisition de cryptomonnaie mises en correspondance, la sélection d'une transaction d'acquisition de cryptomonnaie suivante parmi la pluralité de transactions d'acquisition de cryptomonnaie.

8. Procédé selon l'une quelconque des revendications précédentes, comprenant en outre :
en réponse à la détermination qu'un montant de la transaction d'acquisition de cryptomonnaie sélectionnée dépasse la différence entre le montant de la transaction de cession de cryptomonnaie et le montant total en cours de transactions d'acquisition de cryptomonnaie mises en correspondance, la réduction du montant de la transaction d'acquisition de cryptomonnaie sélectionnée par la différence entre le montant de la transaction de cession de cryptomonnaie actuellement sélectionnée et le montant total en cours de transactions d'acquisition de cryptomonnaie mises en correspondance.

9. Procédé selon l'une quelconque des revendications précédentes, dans lequel le montant de transaction en monnaie fiat est basé sur un prix de monnaie fiat d'une cryptomonnaie identifiée par la transaction, dans lequel le prix de monnaie fiat était effectif à une heure identifiée par une estampille temporelle de la transaction.

10. Procédé selon l'une quelconque des revendications précédentes, comprenant en outre :
la génération d'un formulaire de comptabilité fiscale électronique reflétant l'un parmi : le gain associé à la transaction de cession de cryptomonnaie ou la perte associée à la transaction de cession de cryptomonnaie ;
en réponse à la réception, via une interface utilisateur graphique, d'une approbation du formulaire de comptabilité fiscale électronique, la signature numérique du formulaire de comptabilité fiscale électronique ; et
le téléversement du formulaire de comptabilité fiscale électronique sur un serveur autorisé à accepter les dépôts de formulaires fiscaux électroniques.

11. Procédé selon l'une quelconque des revendications précédentes, dans lequel le procédé est effectué par deux fils de traitement ou plus, chaque fil exécutant une ou plusieurs opérations individuelles du procédé.

12. Système de traitement de données comprenant des moyens destinés à réaliser le procédé selon l'une quelconque des revendications précédentes.

13. Produit programme informatique comprenant des instructions qui, lorsque le programme est exécuté par un ordinateur, amènent l'ordinateur à réaliser le procédé selon l'une quelconque des revendications 1 à 11.

14. Support de stockage lisible par ordinateur comprenant des instructions qui, lorsqu'elles sont exécutées par un ordinateur, amènent l'ordinateur à réaliser le procédé selon l'une quelconque des revendications 1 à 11.
